# EUROPÄISCHE PATENTSCHRIFT

(11) **EP 0 597 275 B1**
(45) Veröffentlichungstag und Bekanntmachung des Hinweises auf die Patenterteilung: **24.04.1996**
(21) Anmeldenummer: 93116695.3
(22) Anmeldetag: 15.10.1993
(51) Int. Cl.: C08F 279/02, C08F 265/04, C08L 101/00, C08L 51/04

(54) **Thermoplastische Formmasse**
Thermoplastic moulding composition
Masse à mouler thermoplastique

(30) Priorität: 07.11.1992 DE 4237640
(43) Veröffentlichungstag der Anmeldung: 18.05.1994
(73) Patentinhaber: BASF Aktiengesellschaft, D-67063 Ludwigshafen (DE)
(72) Erfinder: Fischer, Wolfgang, Dr., D-67067 Ludwigshafen (DE); Guentherberg, Norbert, Dr., D-67346 Speyer (DE); Niessner, Norbert, Dr., D-67159 Friedelsheim (DE)

(56) Entgegenhaltungen:
- EP-A- 0 445 601
- EP-A- 0 450 511
- EP-A- 0 494 534

## Beschreibung

Die Erfindung betrifft teilchenförmige kautschukelastische Pfropfpolymerisate sowie aus diesen hergestellte matte thermoplastische Formmassen mit verbesserter multiaxialer Zähigkeit.

### Stand der Technik

Die Herstellung teilchenförmiger Styrolpfropfpolymerisate aus einem kautschukelastischen Kern und einer Pfropfhülle, z.B. durch Emulsionspolymerisation, ist bekannt. Hierzu wird zunächst durch Polymerisation geeigneter Monomerer eine Pfropfgrundlage hergestellt. Die Monomeren, die die Pfropfhülle bilden sollen, werden dann in Gegenwart der Pfropfgrundlage so polymerisiert, daß ein möglichst hoher Anteil auf die Pfropfgrundlage aufgepfropft wird. Die teilchenförmigen Pfropfpolymerisate werden zur Verbesserung der Schlagzähigkeit an sich spröder, schlagempfindlicher Thermoplaste verwendet. Dabei werden die Monomeren für die Pfropfhülle so gewählt, daß diese mit dem zu modifizierenden Thermoplasten verträglich ist. Die Herstellung solcher sog. Schlagzähmodifier ist seit langem bekannt und z.B. in der US-PS 30 55 859 und der DE-PS 12 60 135 beschrieben.

Ein Hauptproblem bei der Herstellung solcher teilchenförmiger Pfropfpolymerisate ist die Anbindung der Pfropfhülle an die Pfropfgrundlage. An sich findet zwar nach allgemeiner Vorstellung bei der Pfropfung eine chemische Anbindung der wachsenden Pfropfhülle an den Pfropfkern statt, jedoch ist eine zusätzliche Bindung, z.B. durch Nebenvalenzkräfte, Vernetzung usw. durchaus wünschenswert. Bei schlechter Anbindung ist die schlagzähmodifizierende Wirkung nicht ausreichend, so daß nur Produkte mit verminderter Zähigkeit erhalten werden. Zur Verbesserung der Anbindung wurden eine Reihe von Maßahmen vorgeschlagen. DE-A-40 11 163 beschreibt eine Verbesserung der Produkteigenschaften, wenn als Pfropfgrundlage ein Polymerisat verwendet wird, das saure Gruppen enthaltende Monomere einpolymerisiert enthält und auf das als Pfropfhülle ein basische Gruppen enthaltendes Monomeres aufgepfropft wird. Wie in EP-A-450 511 beschrieben, zeigen die daraus hergestellten thermoplastischen Formmassen gleichzeitig matte Oberflächen.

Die bekannten Formmassen der vorstehenden Art sind jedoch hinsichtlich der multiaxialen Zähigkeit verbesserungsbedürftig.

Es wurde nun gefunden, daß thermoplastische Formmassen mit hervorragender multiaxialer Zähigkeit erhalten werden, indem gleichzeitig die Anbindung der Pfropfhülle an die Pfropfgrundlage deutlich verbessert wird, wenn man ein oder mehrere vinylaromatische oder vinylaromatische und mindestens ein polares, copolymerisierbares, ethylenisch ungesättigtes Monomer sowie eine polymerisierbare Hydroxyalkylverbindung in Gegenwart einer Pfropfgrundlage polymerisiert, die mindestens ein saures Monomeres als Comonomer aufweist und den so erhaltenen Pfropfkautschuk zur Herstellung einer Formmasse verwendet. Formmassen mit dem erfindungsgemäßen Pfropfkautschuk führen zu Produkten mit sehr guter multiaxialer Zähigkeit, die auch als Mattierungsmittel verwendet werden können.

Unmittelbarer Erfindungsgegenstand ist daher ein teilchenförmiges Pfropfpolymerisat aus
- A:: 30 bis 80 Gew.-% einer kautschukelastischen Pfropfgrundlage A aus, bezogen auf A,
- A11:: 75 bis 99,8 Gew.-% mindestens eines kautschukelastische Polymere bildenden Alkylacrylats A11 mit bis zu 8 C-Atomen im Alkylrest,
- A12:: 0,1 bis 5 Gew.-% mindestens eines polyfunktionellen, vernetzend wirkenden Monomeren A12,
- A13:: 0,1 bis 20 Gew.-% mindestens eines eine oder mehrere saure Gruppen enthaltenden Monomeren A13
oder
- A111:: mindestens 50 Gew.-% eines oder mehrerer Diene A111,
- A112:: bis zu 50 Gew.-% mindestens eines weiteren ethylenisch ungesättigten Monomeren A112,
- A113:: 0,1 bis 20 Gew.-% mindestens eines eine oder mehrere saure Gruppen enthaltenden Monomeren A 113
und
- B:: 20 bis 70 Gew.-% einer auf die Propfgrundlage A gepfropften Hülle B aus, bezogen auf B,
- B1:: bis 99,9 Gew.-% mindestens eines vinylaromatischen Monomeren B1 und/oder
- B2:: bis 99,9 Gew.-% mindestens eines polaren, copolymerisierbaren, ethylenisch ungesättigten Monomeren B2 und
- B3:: 0,1 bis 20 Gew.-% mindestens eines Hydroxyalkylacrylats oder -methacrylats B3.

Zur Erfindung sollen auch die unter Verwendung der vorstehenden Pfropfcopolymerisate erhältlichen thermoplastischen Formmassen zählen, soweit sie im wesentlichen aus 1 bis 50 Gew.-% des teilchenförmigen Pfropfpolymerisats und 50 bis 99 Gew.-% mindestens eines Polymeren mit einer Glasübergangstemperatur von mehr als 25°C als Matrix und gegebenenfalls untergeordnete Mengen an üblichen Zusatz- und Hilfsstoffen bestehen.

Die erfindungsgemäßen Propfcopolymerisate bestehen z.B. aus
- A:: 30 - 80 Gew.-%
- bevorzugt: 35 - 80 Gew.-%
- besonders bevorzugt: 35 - 75 Gew.-% (bezogen auf A + B)
- A11:: 75 - 99,8 Gew.-%
- bevorzugt: 80 - 99,7 Gew.-%
- besonders bevorzugt: 85 - 99,7 Gew.-% (bezogen auf A)
- A12:: 0,1 - 5,0 Gew.-%
- bevorzugt: 0,1 - 4,5 Gew.-%
- besonders bevorzugt: 0,1 - 4,0 Gew.-% (bezogen auf A)
- A13:: 0,1 - 20,0 Gew.-%
- bevorzugt: 0,2 - 15,5 Gew.-%
- besonders bevorzugt: 0,2 - 11,0 Gew.-% (bezogen auf A)
- A111:: mind. 50 Gew.-%
- bevorzugt: mind. 75 Gew.-%
- besonders bevorzugt: mind. 92 Gew.-% (bezogen auf A)
- A112:: 0 - 50 Gew.-%
- bevorzugt: 0 - 25 Gew.-%
- besonders bevorzugt: 0 Gew.-% (bezogen auf A)
- A113:: 0.1 - 20 Gew.-%
- bevorzugt: 0,2 - 10 Gew.-%
- besonders bevorzugt: 0,2 - 8 Gew.-% (bezogen auf A)
- B:: 20 - 70 Gew.-%
- bevorzugt: 20 - 65 Gew.-%
- besonders bevorzugt: 25 - 65 Gew.-% (bezogen auf A + B)
- B1:: 0 - 99,9 Gew.-%
- bevorzugt: 0 - 99,8 Gew.-%
- besonders bevorzugt: 0 - 99,5 Gew.-% (bezogen auf B)
- B2:: 0 - 99,9 Gew.-%
- bevorzugt: 0 - 99,8 Gew.-%
- besonders bevorzugt: 0 - 99,5 Gew.-% (bezogen auf B)
- B1 + B2:: 80 - 99,9 Gew.-%
- bevorzugt: 85 - 99,8 Gew.-%
- besonders bevorzugt: 90 - 99,5 Gew.-% (bezogen auf B)
- B3:: 0,1 - 20 Gew.-%
- bevorzugt: 0,2 - 15 Gew.-%
- besonders bevorzugt: 0,5 - 10 Gew.-% (bezogen auf B)

Die erfindungsgemäßen Formmassen mit matter Oberfläche werden dadurch erhalten, daß man einer ggf. bereits schlagzäh modifizierten Formmasse, beispielsweise ABS, ASA, SAN, (schlagzähem) Polystyrol, Polycarbonat/ABS, Polycarbonat/ASA, Polyphenylenether/HIPS, (schlagzähem) Polymethylmethacrylat, (schlagzähem) PVC sowie deren Mischungen untereinander 1 bis 50 Gew.-% eines erfindungsgemäßen teilchenförmigen Pfropfpolymerisats zusetzt.

Die Gruppe der zu mattierenden Polymeren umfaßt auch die Klasse der Polycarbonate, Polyestercarbonate, Polyester, Polyamide, Polyphenylenether, Polyetherketone, Polyethersulfone, Polysulfone, Polyoxyalkylene, Polystyrole, Polyacrylate, Polymethacrylate, Polyarylensulfide sowie deren Mischungen.

Gegenstand der Erfindung sind somit teilchenförmige Pfropfpolymerisate der vorstehenden, herstellungsbedingten Zusammensetzung sowie unter Verwendung solcher Pfropfpolymerisate hergestellte thermoplastische Formmassen. Über die erfindungsgemäßen teilchenförmigen Pfropfcopolymerisate, ihre Bestandteile und ihre Herstellung ist im einzelnen das folgende zu sagen:

Die teilchenförmigen Pfropfpolymerisate werden aus der Pfropfgrundlage (Kautschuk) A und einer der vorgesehenen Propfhülle B entsprechenden Monomerenmischung in an sich bekannter Weise erhalten. Als Kautschuk A dient entweder ein vernetztes Acrylsäureester-Polymerisat oder ein Diencopolymerisat mit einer Glasübergangstemperatur unter 0°C, bevorzugt unter -20°C.

Als Monomere A11 kommen Acrylsäureester mit 1 bis 8 Kohlenstoffatomen, mindestens teilweise solche mit 4 bis 8 Kohlenstoffatomen, im Alkylrest in Betracht. Als geeignet seien besonders Acrylsäure-n-butylester und Acrylsäureethylhexylester genannt. Die Acrylsäureester können jeweils allein oder auch in Mischung miteinander eingesetzt werden.

Zur Erzielung guter mechanischer Eigenschaften hat es sich als notwendig erwiesen, daß das als Pfropfgrundlage verwendete Acrylsäureester-Polymerisat vernetzt ist. Hierzu wird die Polymerisation der Acrylsäureester in Gegenwart von 0,1 bis 5 Gew.-%, bezogen auf das Gesamtgewicht der bei der Herstellung der Pfropfgrundlage eingesetzten Monomeren, eines copolymerisierbaren, polyfunktionellen, die Vernetzung bewirkenden Monomeren A12 durchgeführt. Es eignen sich Monomere, die mindestens zwei zur Copolymerisation befähigte ethylenische Doppelbindungen enthalten, die nicht in 1,3-Stellung konjugiert sind. Beispiele sind Divinylbenzol, Diallylmaleat, Diallylfumarat, Diallylphthalat, Allylmethacrylat, Triallylcyanurat oder Triallylisocyanurat. Als besonders günstiges Vernetzungsmonomeres hat sich der Acry säureester des Tricyclodecenylalkohols erwiesen (vgl. DE-PS 12 60 135).

Zur Verbesserung der Anbindung der Pfropfhülle an die Pfropfgrundlage enthält das zur Herstellung der Pfropfgrundlage verwendete Monomerengemisch des weiteren noch 0,1 bis 20 Gew.-% eines oder mehrerer copolymerisierbarer Monomerer, die eine oder mehrere saure Gruppen enthalten (A13 bzw. A113). Als saure Gruppen kommen insbesondere Carbonsäure-, Sulfonsäure- oder Phosphorsäuregruppen in Frage. Bevorzugte saure Monomere sind alpha-beta ungesättigte Carbonsäuren wie Acrylsäure oder Methacrylsäure, ferner Citraconsäure, Crotonsäure, Fumarsäure, Itaconsäure, Maleinsäure, Vinylsulfonsäure, Vinylbenzolsulfonsäure, Vinylphosphorsäuren oder Zimtsäure.

Die Herstellung des Pfropfmischpolymerisats kann nach der in der DE-PS 12 60 135 beschriebenen Methode erfolgen. Hierzu wird zunächst die Pfropfgrundlage A hergestellt; wenn die Pfropfgrundlage ein Acrylatkautschuk sein soll, wird der oder die Acrylsäureester A11, das polyfunktionelle Monomere A12 und das erfindungsgemäße saure Monomere A13 in wäßriger Emulsion bei 20 bis 100°C, bevorzugt zwischen 50 und 80°C polymerisiert. Es können die üblichen Emulgatoren wie die Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise nimmt man die Natriumsalze von Alkylsulfonaten oder von Fettsäuren mit 10 bis 18 Kohlenstoffatomen. Es ist günstig, die Emulgatoren in einer Menge von 0,5 bis 5 Gew.-%, insbesondere von 1 bis 2 Gew.-%, bezogen auf das Gesamtgewicht der für die Herstellung der Pfropfgrundlage verwendeten Monomeren, einzusetzen. Im allgemeinen wird bei einem Wasser/Monomer-Verhältnis von 2:1 bis 0,7:1 gearbeitet. Als Polymerisationsinitiatoren dienen insbesondere die gebräuchlichen Persulfate, wie z.B. Kaliumperoxodisulfat; es sich jedoch auch Redoxsysteme geeignet. Die Menge an Initiatoren (z.B. 0,1 bis 1 Gew.-%, bezogen auf das Gesamtgewicht der Monomeren) richtet sich in bekannter Weise nach dem gewünschten Molgewicht.

Als Polymerisationshilfsstoffe können die üblichen Puffersubstanzen, durch welche pH-Werte von vorzugsweise 6 bis 9 eingestellt werden, z.B. Natriumbicarbonat und Natriumpyrophosphat, sowie bis 3 Gew.-% eines Molekulargewichtsreglers, wie Mercaptan, Terpinol oder dimeres alpha-Methylstyrol verwendet werden.

Die genauen Polymerisationsbedingungen, insbesondere Art, Dosierung und Menge des Emulgators werden innerhalb der oben angegebenen Bereiche so bestimmt, daß der erhaltene Latex des vernetzten Acrylsäureester-Polymerisats einen d₅₀-Wert im Bereich von etwa 30 bis 1000 nm, bevorzugt im Bereich von 50 bis 800 nm besitzt.

Wenn der Pfropfkern ein Dienkautschuk sein soll, wird zweckmäßig wie folgt verfahren: Das Elastomer, die Pfropfgrundlage A wird hergestellt, indem A111 allein, gegebenenfalls zusammen mit den weiteren Comonomeren in wäßriger Emulsion in an sich bekannter Weise bei Temperaturen von 20 bis 100°C, vorzugsweise von 50 bis 80°C, polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natrium- oder Kaliumsalze von Alkylsulfonaten oder Fettsäuren mit 10 bis 18 Kohlenstoffatomen. Es ist günstig, die Emulgatoren in Mengen von 0,5 bis 5 Gew.-%, insbesondere von 0,5 bis 2 Gew.-%, bezogen auf die bei der Herstellung der Pfropfgrundlage A eingesetzten Monomeren, einzusetzen. Im allgemeinen wird bei einem Wasser- und Monomeren-Verhältnis von 2:1 bis 0,7:1 gearbeitet. Als Polymerisationsinitiatoren dienen insbesondere die gebräuchlichen Persulfate, wie Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung der Pfropfgrundlage A eingesetzten Monomeren, eingesetzt. Als weitere Polymerisationshilfsstoffe können die üblichen Puffersubstanzen, durch welche pH-Werte von vorzugsweise 6 bis 9 eingestellt werden - z.B. Natriumbicarbonat und Natriumpyrophosphate dienen; ferner können in der Regel 0,1 bis 3 Gew.-% eines Molekulargewichtsreglers - wie Mercaptane, Terpinole oder dimeres alpha-Methylstyrol - bei der Polymerisation verwendet werden.

Die genauen Polymerisationsbedingungen, insbesondere Art, Dosierung und Menge des Emulgators, werden innerhalb der oben angegebenen Bereiche im einzelnen so gewählt, daß der erhaltene Latex des Polymerisats A einen d₅₀-Wert im Bereich von etwa 100 bis 750 nm, vorzugsweise im Bereich von 100 bis 600 nm, besitzt. Oder aber das Emulsionspolymerisat mit mittleren Teilchengrößen im Bereich von 60 bis 150 nm wird in bekannter Weise agglomeriert (vgl. DE-AS 24 27 960).

### Pfropfhülle B:

Zur Herstellung des Pfropfmischpolymerisates aus Kern und Pfropfhülle wird in Gegenwart des erhaltenen Latex A ein Monomerengemisch aus bis zu 99,9 Gew.-% mindestens eines vinylaromatischen Monomeren B1 und/oder bis zu 99,9 Gew.-% mindestens eines polaren, copolymerisierbaren Monomeren B2 und 0,1 bis 20 Gew.-% mindestens eines Hydroxyalkylacrylats oder -methacrylats B3 polymerisiert. Beispiele für vinylaromatische Monomere sind Styrol, alpha-Methylstyrol und kernalkylierte Styrole wie p-Methylstyrol und tert.-Butylstyrol. Besonders bevorzugt werden Styrol, alpha-Methylstyrol und p-Methylstyrol eingesetzt. Beispiele für polare, copolymerisierbare, ethylenisch ungesättigte Monomere B2 sind Acrylnitril, Methacrylnitril, Acrylsäure- und Methacrylsäurealkylester mit 1 bis 4 Kohlenstoffatomen im Alkylrest. Bevorzugt werden Acrylnitril, Methylmethacrylat und Gemische derselben. Geeignete Hydroxyalkylacrylate oder -methacrylate B3 sind Ester der Acrylsäure oder Methacrylsäure mit mehrwertigen aliphatischen Alkoholen mit insbesondere 2 bis 6 C-Atomen wie 2-Hydroxyethylacrylat oder Butandiol-(1,4)-monoacrylat oder -methacrylat. B1 und/oder B2 sind am Aufbau der Propfhülle zu mindestens 80 Gew.-% beteiligt.

Es ist vorteilhaft, die Pfropfmischpolymerisation auf das als Pfropfgrundlage A dienende Polymerisat wiederum in wäßriger Emulsion durchzuführen. Sie kann im gleichen System wie die Polymerisation der Pfropfgrundlage vorgenommen werden, wobei weiterer Emulgator und Initiator zugegeben werden kann. Diese müssen mit den zur Herstellung der Pfropfgrundlage A verwendeten Emulgatoren bzw. Initiatoren nicht identisch sein. So kann es z.B. zweckmäßig sein, als Initiator für die Herstellung der Pfropfgrundlage A ein Persulfat zu verwenden, zur Polymerisation der Pfropfhülle B jedoch ein Redoxinitiatorsystem einzusetzen. Im übrigen gilt für die Wahl von Emulgator, Initiator und Polymerisationshilfsstoffen das bei der Herstellung der Pfropfgrundlage A gesagte. Das aufzupfropfende Monomerengemisch kann dem Reaktionsgemisch auf einmal, absatzweise in mehreren Stufen oder vorzugsweise kontinuierlich während der Polymerisation zugegeben werden. Die Pfropfmischpolymerisation wird so gesteuert, daß ein Pfropfgrad von 10 bis 60 Gew.-%, vorzugsweise von 15 bis 45 Gew.-%, resultiert.

Die erfindungsgemäßen teilchenförmigen Pfropfpolymerisate können für sich allein als Formmassen verwendet werden. Hierzu können sie z.B. durch Sprühtrocknung aufgearbeitet werden. Bevorzugt werden die teilchenförmigen Pfropfpolymerisate jedoch zur Abmischung mit einem Thermoplasten verwendet, um dessen Schlagzähigkeit zu erhöhen. Zur Modifizierung geeignete Thermoplaste haben Glasübergangstemperaturen über 25°C, bevorzugt über 60°C. Sie werden im folgenden auch als Hartkomponente (Matrix) bezeichnet. Beispiele für geeignete Hartkomponenten sind Polyvinylchlorid, Polymethylmethacrylat, Polystyrol sowie Copolymere aus einem vinylaromatischen Monomeren und einem polaren, copolymerisierbaren, ethylenisch ungesättigten Monomeren. Geeignete vinylaromatische sowie polare, copolymerisierbare, ethylenisch ungesättigte Monomeren sind auch hier die bei der Herstellung der Pfropfhülle als B1 und B2 genannten. Besonders bevorzugte Hartkomponenten sind Styrol-Acrylnitril und alpha-Methylstyrol-Acrylnitril-Copolymere. Die Einarbeitung der erfindungsgemäßen teilchenförmigen Pfropfpolymerisate kann z.B. dadurch erfolgen, daß das teilchenförmige Pfropfpolymerisat durch Zugabe eines Elektrolyten aus der Emulsion isoliert, entwässert und anschließend, gegebenenfalls nach Trocknung, durch gemeinsames Extrudieren, Kneten oder Walzen mit der Hartkomponente vermischt wird.

Die erfindungsgemäßen thermoplastischen Formmassen können als weitere Bestandteile Zusatzstoffe enthalten, wie sie für thermoplastische Formmassen üblich sind. Als solche seinen beispielsweise genannt: Füllstoffe, weitere, verträgliche Kunststoffe, Antistatika, Antioxidantien, Flammschutzmittel, Schmiermittel, Farbstoffe und Pigmente. Die Zusatzstoffe werden in üblichen Mengen, vorzugsweise in Mengen von bis zu 30 Gew.-%, bezogen auf das Gesamtgewicht der thermoplastischen Formmasse, eingesetzt. Verträgliche Kunststoffe können auch einen höheren Anteil ausmachen.

Die erfindungsgemäßen Massen lassen sich nach den für die Thermoplastverarbeitung üblichen Verfahren, wie z.B. Extrusion und Spritzgießen, zu den verschiedenartigsten Formkörpern, wie z.B. Fensterprofilen, Gartenmöbeln, Booten, Schildern, Haushaltsgeräten, Lampenabdeckungen, Automobilteilen und Kinderspielzeug verarbeiten. Die erfindungsgemäßen Massen eignen sich besonders zur Herstellung von matten Formkörpern, bei denen eine hohe Zähigkeit gefordert ist.

### Beispiele

### 1. Herstellung der Pfropfgrundlage A

### 1.1 Die Pfropfgrundlage auf Acrylesterbasis (A11, A12, A13) wird nach folgender Rahmenvorschrift erhalten:

160 g des in der Tabelle zur Herstellung der Pfropfgrundlage A angegebenen Monomerengemisches wurden in 1500 g Wasser unter Zusatz von 5 g des Natriumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 60°C erwärmt. 10 Minuten nach dem Anspringen der Polymerisationsreaktion wurden innerhalb von 3 Stunden weitere 840 g der angegebenen Mischung zugegeben. Nach Beendigung der Monomerzugabe wurde die Emulsion noch eine Stunde bei 60°C gehalten.

### 1.2 Eine Pfropfgrundlage auf Butadienbasis (A111, A112, A113) kann nach folgender Vorschrift erhalten werden:

Durch Polymerisation von 600 g des in der Tabelle angegebenen Monomerengemisches wurde in Gegenwart einer Lösung von 6 g tert.-Dodecylmercaptan, 7 g C₁₄-Na-Alkylsulfonat als Emulgator, 2 g Kaliumperoxidsulfat und 2 g Natriumphosphat in 800 ml Wasser wird bei 65°C ein Polybutadienlatex hergestellt. Der Umsatz betrug 98 %. Es wurde ein Latex erhalten, dessen mittlere Teilchengröße bei 100 nm lag. Der erhaltene Latex wurde durch Zusatz von 25 g einer Emulsion eines Copolymeren aus 96 Teilen Ethylacrylat und 4 Teilen Methacrylsäureamid mit einem Feststoffgehalt von 10 Gew.-% agglomeriert, wobei ein Polybutadienlatex mit einer mittleren Teilchengröße von 350 nm entstand.

### 2. Herstellung der teilchenförmigen Pfropfpolymerisate

2.1 2100 g der nach Vorschrift 1.1 hergestellten Emulsion wurden mit 1150 g Wasser und 2,7 g Kaliumperoxodisulfat gemischt und unter Rühren auf 65°C erwärmt. Nach Erreichen der Reaktionstemperatur wurden im Lauf von 3 Stunden 560 g des in der Tabelle für die Herstellung der Pfropfhülle B angegebenen Monomerengemisches zudosiert. Nach Beendigung der Zugabe wurde die Emulsion noch 2 Stunden bei 65°C gehalten. Das Pfropfpolymerisat wurde mittels Calciumchloridlösung bei 95°C aus der Emulsion gefällt, mit Wasser gewaschen und im warmen Luftstrom getrocknet.

2.2 Nach Zusetzen von 400 g Wasser, 4 g Na-C₁₄-Alkylsulfonat und 2 g Kaliumperoxodisulfat zu der nach Vorschrift 1.2 hergestellten Pfropfgrundlage wurden 400 g des in der Tabelle angegebenen Monomerengemisches B innerhalb von 4 Stunden zugeführt. Die Polymerisation geschah unter Rühren bei 75°C. Der Umsatz, bezogen auf Styrol/Acrylnitril ist praktisch quantitativ. Die erhaltene Pfropfkautschukdispersion wird mittels Magnesiumsulfatlösung gefällt und das abgetrennte Pfropfmischpolymerisat mit destilliertem Wasser gewaschen und getrocknet.

### 3. Abmischung mit Hartkomponente

Zur Herstellung der Abmischungen wurde ein Styrol/Acrylnitril-Copolymerisat mit einem Acrylnitrilgehalt von 35 % und einer Viskositätszahl von 80 verwendet. Das gefällte und getrocknete Pfropfmischpolymerisat aus (2) wurde auf einem Extruder bei 250°C damit gemischt, wobei das resultierende Gemisch einen Pfropfpolymerisatanteil von 50 % aufwies. Aus diesem Gemisch wurden durch Spritzguß Formteile hergestellt,

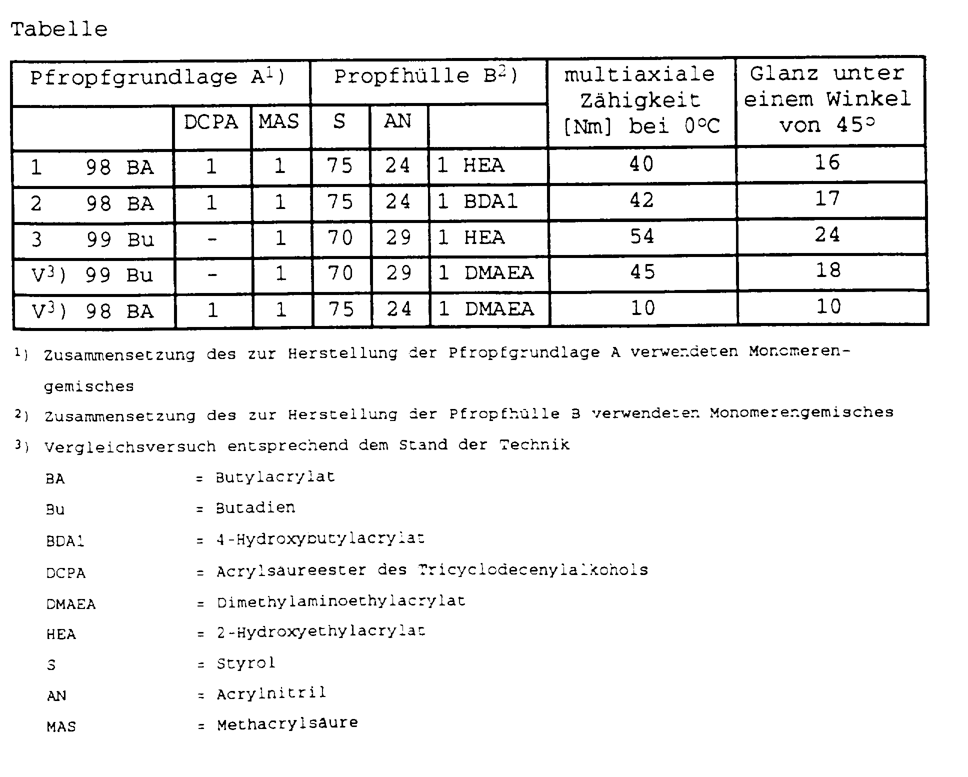

## Patentansprüche

1. Teilchenförmiges Pfropfpolymerisat aus
A: 30 bis 80 Gew.-% einer einer kautschukelastischen Pfropfgrundlage A aus, bezogen auf A,
A11: 75 bis 99,8 Gew.-% mindestens eines kautschukelastische Polymere bildenden Alkylacrylats A11 mit bis zu 8 C-Atomen im Alkylrest,
A12: 0,1 bis 5 Gew.-% mindestens eines polyfunktionellen, vernetzend wirkenden Monomeren A12,
A13: 0,1 bis 20 Gew.-% mindestens eines eine oder mehrere saure Gruppen enthaltenden Monomeren A13
oder
A111: mindestens 50 Gew.-% eines oder mehrerer Diene A111,
A112: bis zu 50 Gew.-% mindestens eines weiteren ethylenisch ungesättigten Monomeren A112,
A113: 0,1 bis 20 Gew.-% mindestens eines eine oder mehrere saure Gruppen enthaltenden Monomeren A 113
und
B: 20 bis 70 Gew.-% einer auf die Propfgrundlage A gepfropften Hülle B aus, bezogen auf B,
B1: bis 99,9 Gew.-% mindestens eines vinylaromatischen Monomeren B1 und/oder
B2: bis 99,9 Gew.-% mindestens eines polaren, copolymerisierbaren, ethylenisch ungesättigten Monomeren B2 und
B3: 0,1 bis 20 Gew.-% mindestens eines Hydroxyalkylacrylats oder -methacrylats B3.

2. Verwendung der Pfropfpolymerisate nach Anspruch 1 zur Herstellung von thermoplastischen Formmassen, soweit sie im wesentlichen aus 1 bis 50 Gew.-% des teilchenförmigen Pfropfpolymerisats und 50 bis 99 Gew.-% mindestens eines Polymeren mit einer Glasübergangstemperatur von mehr als 25°C als Matrix und gegebenenfalls untergeordneten Mengen an üblichen Zusatz- und Hilfsstoffen bestehen.

3. Verfahren zur Herstellung von Formmassen mit matter Oberfläche dadurch gekennzeichnet, daß man einer nicht modifizierten oder bereits schlagzäh modifizierten Formmasse, ausgewählt aus ABS, ASA, SAN, (schlagzähem) Polystyrol, Polycarbonat/ABS, Polycarbonat/ASA, Polyphenylenether/HIPS, (schlagzähem) Polymethylmethacrylat, (schlagzähem) PVC, Polycarbonat, Polyestercarbonat, Polyester, Polyamid, Polyphenylenether, Polyetherketon, Polyethersulfon, Polysulfon, Polyoxyalkylen, Polyacrylat, Polymethacrylat, Polyarylensulfid sowie deren Mischungen untereinander 1 bis 50 Gew.-% des teilchenförmigen Pfropfpolymerisats nach Anspruch 1 oder 2 zusetzt.

## Claims

1. A particulate graft copolymer comprising
A: from 30 to 80 % by weight of a rubber-elastic grafting base A composed of, based on A,
A11: from 75 to 99.8 % by weight of at least one alkyl acrylate A11 which forms rubber-elastic polymers and has up to 8 carbon atoms in the alkyl radical,
A12: from 0.1 to 5 % by weight of at least one polyfunctional, crosslinking monomer A12,
A13: from 0.1 to 20 % by weight of at least one monomer A13 containing one or more acidic groups
or
A111: at least 50 % by weight of one or more dienes A111,
A112: up to 50 % by weight of at least one further ethylenically unsaturated monomer A112,
A113: from 0.1 to 20 % by weight of at least one monomer A113 containing one or more acidic groups
and
B: from 20 to 70 % by weight of a sheath which is grafted onto the grafting base A and is composed of, based on B,
B1: up to 99.9 % by weight of at least one aromatic vinyl monomer B1 and/or
B2: up to 99.9 % by weight of at least one polar, copolymerizable, ethylenically unsaturated monomer B2 and
B3: from 0.1 to 20 % by weight of at least one hydroxyalkyl acrylate or hydroxyalkyl methacrylate B3.

2. The use of the graft copolymers as claimed in claim 1 for preparing thermoplastic molding materials, insofar as they essentially consist of from 1 to 50 % by weight of the particulate graft copolymer and from 50 to 99 % by weight of at least one polymer having a glass transition temperature of more than 25°C as matrix and if desired minor amounts of conventional additives and auxiliaries.

3. A process for preparing molding materials having a matt surface, wherein from 1 to 50 % by weight of the particulate graft copolymer as claimed in claim 1 or 2 is added to an unmodified or impact-modified molding material selected from ABS, ASA, SAN, (impact-resistant) polystyrene, polycarbonate/ABS, polycarbonate/ASA, polyphenylene ether/HIPS, (impact-resistant) polymethyl methacrylate, (impact-resistant) PVC, polycarbonate, polyester carbonate, polyester, polyamide, polyphenylene ether, polyether ketone, polyether sulfone, polysulfone, polyoxyalkylene, polyacrylate, polymethacrylate, polyarylene sulfide and their mixtures with one another.

## Revendications

1. Polymère greffé particulaire constitué de
A: 30 à 80 % en poids d'une base de greffage caoutchouteuse A constituée de, par rapport à A,
A11 : 75 à 99,8 % en poids d'au moins un acrylate d'alkyle A11 formant des polymères caoutchouteux et présentant jusqu'à 8 atomes de carbone dans le résidu alkyle,
A12: 0,1 à 5% en poids d'au moins un monomère polyfonctionnel, à action réticulante A12,
A13: 0,1 à 20 % en poids d'au moins un monomère contenant un ou plusieurs groupes acides A13
ou
A111 : au moins 50 % en poids d'un ou de plusieurs diènes A111,
A112: jusqu'à 50 % en poids d'au moins un monomère éthyléniquement insaturé A112,
A113 : 0,1 à 20% en poids d'au moins un monomère contenant un ou plusieurs groupes acides A113
et
B : 20 à 70% en poids d'une enveloppe B greffée sur la base de greffage A constituée de, par rapport à B,
B1 : jusqu'à 99,9 % en poids d'au moins un monomère vinylaromatique B1 et/ou
B2: jusqu'à 99,9 % en poids d'au moins un monomère B2 polaire, copolymérisable, éthyléniquement insaturé et
B3: 0,1 à 20 % en poids d'au moins un acrylate ou méthacrylate d'hydroxyalkyle B3.

2. Utilisation des polymères greffés selon la revendication 1 pour la préparation de masses à mouler thermoplastiques, dans la mesure où elles sont constituées essentiellement de 1 à 50 % en poids du polymère greffé particulaire et de 50 à 99 % en poids d'au moins un polymère avec une température de transition vitreuse supérieure à 25 °C à titre de matrice et éventuellement des quantités secondaires d'additifs et d'adjuvants usuels.

3. Procédé pour la préparation de masses à mouler à surface matte, caractérisé en ce qu'on ajoute à une masse à mouler non-modifiée ou déjà modifiée du point de vue de la résistance aux chocs, choisie parmi l'ABS, l'ASA, le SAN, le polystyrène (résistant aux chocs), le polycarbonate/ABS, le polycarbonate/ASA, l'éther de polyphénylène/HIPS, le méthacrylate de polyméthyle (résistant aux chocs), le PVC (résistant aux chocs), le polycarbonate, le polyestercarbonate, le polyester, la polyamide, l'éther de polyphénylène, la polyéthercétone, la polyéthersulfone, la polysulfone, le polyoxyalkylène, le polyacrylate, le polyméthacrylate, le sulfure de polyarylène, de même que leurs mélanges mutuels, 1 à 50 % en poids d'un polymère greffé particulaire selon la revendication 1 ou 2.
